# EUROPEAN PATENT APPLICATION

(11) **EP 2 424 119 A1**
(43) Date of publication of application: **29.02.2012**
(21) Application number: 11163322.8
(22) Date of filing: 21.04.2011
(51) Int. Cl.: H04B 1/04

(54) **Antenna module and impedance matching method thereof**

(30) Priority: 24.08.2010 TW 099128296
(71) Applicant: HTC Corporation, Taoyuan County 330 (TW)
(72) Inventor: Wu, Wei-Yang, 330, Taoyuan City, Taoyuan County (TW); Ma, Chien-Hua, 330, Taoyuan City, Taoyuan County (TW); Lin, Yen-Chuan, 330, Taoyuan City, Taoyuan County (TW)
(74) Representative: 2K Patentanwälte Blasberg Kewitz & Reichel

(57) **Abstract**

An antenna module and an impedance matching method thereof are provided. The antenna module includes an antenna piece, a tunable matching circuit and a control unit. The antenna piece has a feeding point. The tunable matching circuit, electrically connected to the feeding point and configured to provide a loading impedance, has an inductor, a first tunable capacitor and a second tunable capacitor. One end of the first tunable capacitor is electrically connected to one end of the inductor; and one end of the second tunable capacitor is electrically connected to another end of the first tunable capacitor and the feeding point, and another end of the second tunable capacitor is electrically connected to a system ground. The control unit is electrically connected to the matching circuit and configured to load an operation frequency so as to generate a control signal for adaptively modulating the values of the first and the second tunable capacitance.

## Description

### BACKGROUND

### Field of Invention

The subject application relates to an antenna module. More particularly, the subject application relates to an antenna module capable of adjusting the loading impedance thereof.

### Description of Related Art

With the progressing of the mobile phone system, the evolution of mobile technology includes 2G system in the past, present 3G system and Long Term Evolution (LTE) system in the future. LTE system among them is a MISO (Multi-input Single-out) system, and therefore the mobile phones with LTE system need to support more and wider transmission frequency. However, the matching circuit coupled between the antenna and the power amplifier in traditional antenna designs does not allow any adjustment after mounting. In this case, the bandwidth in traditional designs is fixed without flexibility.

Therefore, when we want to apply the antenna of prior art into LTE system, the mobile phone has to implement two antennas, one of which is used for transmitting and receiving while the other one is used for receiving. However, it will take too much space in the mobile phone. Sometimes, there is still another antenna for GSM system in the mobile phone. In this case, it takes total three antennas for GSM and LTE frequencies. It is not suitable in the compact trend of modern products. Besides, the present design of antenna on mobile phone is hard to meet the demanding of frequency range, e.g. 698 - 894 MHz, in LTE system.

The effective operating frequency ratio is around 8% out of total frequency band in present GSM system, i.e. (894-824) / [(894+824)/2] = 8%. When we want to combine an LTE antenna with the original GSM antenna, it needs to cover 25% over the total frequency band of both GSM and LTE system, i.e. (894-698) / [(894+698)/2] = 25%.

However, such a large bandwidth requirement can not be fulfilled in present antenna design of traditional mobile phone.

### SUMMARY

One object of the subject application is to provide an antenna module. A concept of a tunable matching circuit is utilized in the subject application for adjusting the loading impedance, so as to increase the effective bandwidth of operating frequency without varying the main structure of the antenna piece.

An aspect of the subject application is to provide an antenna module, which includes an antenna piece, a tunable matching circuit and a control unit. The antenna piece has a signal feeding point. The tunable matching circuit is electrically connected to the signal feeding point. The tunable matching circuit is configured to provide a loading impedance. The tunable matching circuit includes an inductor, a first tunable capacitor and a second tunable capacitor. One end of the first tunable capacitor is electrically connected to one end of the inductor. One end of the second tunable capacitor is electrically connected to another end of the first tunable capacitor and the signal feeding point. Another end of the second tunable capacitor is electrically connected to a system ground. The control unit is electrically connected to the tunable matching circuit. The control unit is configured to load an operating frequency and accordingly generate a control signal for the tunable matching circuit, so as to adaptively modulate capacitance values of the first tunable capacitor and the second tunable capacitor for adjusting the loading impedance.

According to an embodiment of the invention, the control unit includes a microprocessor configured to load the operating frequency from a central processing unit.

According to an embodiment of the invention, the microprocessor further includes a lookup table for matching, and the microprocessor selects corresponding capacitance data from the lookup table according to the operating frequency.

According to an embodiment of the invention, the capacitance data includes a data capacitance value of the first tunable capacitor and a data capacitance value of the second tunable capacitor.

According to an embodiment of the invention, the control unit further includes a control circuit, which is electrically connected with the microprocessor and the tunable matching circuit.

According to an embodiment of the invention, the control circuit is configured to generate the control signal for the tunable matching circuit according to the capacitance data, for respectively modulating the capacitance values of the first tunable capacitor and the second tunable capacitor.

According to an embodiment of the invention, the capacitance values of the first tunable capacitor and the second tunable capacitor are ranged from 0.2 pF to 20 pF.

According to an embodiment of the invention, the capacitance value of the first tunable capacitor is greater than the capacitance value of the second tunable capacitor.

According to an embodiment of the invention, an inductance value of the inductor is 2.2 nH.

Another aspect of the invention is to provide an impedance matching method for an antenna module. The antenna module includes a tunable matching circuit. The tunable matching circuit has an inductor, a first tunable capacitor and a second tunable capacitor. The impedance matching method includes steps of: (1) loading an operating frequency; (2) generating a control signal for the tunable matching circuit according to the operating frequency; and (3) adaptively modulating capacitance values of the first tunable capacitor and the second tunable capacitor according to the control signal, for adjusting a loading impedance of the tunable matching circuit.

According to an embodiment of the invention, the impedance matching method is performed to load the operating frequency from a central processing unit.

According to an embodiment of the invention, the impedance matching method is performed to select capacitance data corresponding to the operating frequency.

According to an embodiment of the invention, the impedance matching method is performed to select the corresponding capacitance data from a lookup table for matching.

According to an embodiment of the invention, the capacitance data includes a data capacitance value of the first tunable capacitor and a data capacitance value of the second tunable capacitor.

According to an embodiment of the invention, the impedance matching method is performed to generate the control signal for the tunable matching circuit according to the capacitance data.

### BRIEF DESCRIPTION OF THE DRAWINGS

The invention can be more fully understood by reading the following detailed description of the embodiments, with reference made to the accompanying drawings as follows:
Fig .1 is a block diagram illustrating an antenna module according to an embodiment of the invention;
Fig. 2 is a circuit diagram illustrating a tunable matching circuit of the antenna module in FIG. 1;
FIG. 3 illustrates a look-up table for matching in a preferable embodiment; and
FIG. 4 is a flow chart illustrating an impedance matching method for an antenna module according to an embodiment of the invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

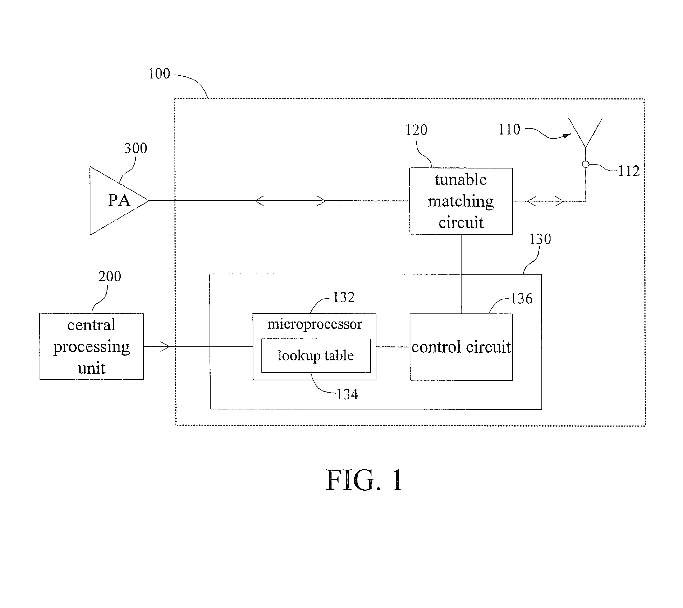

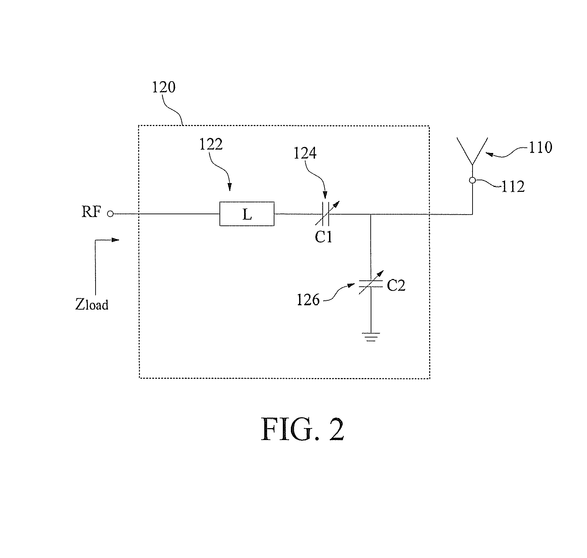

Please refer to FIG. 1 and FIG. 2. FIG. 1 is a block diagram illustrating an antenna module according to an embodiment of the subject application. Fig. 2 is a circuit diagram illustrating a tunable matching circuit of the antenna module in FIG. 1. As shown in aforesaid diagrams, the antenna module 100 includes an antenna piece 110, the tunable matching circuit 120 and a control unit 130. The antenna piece 110 has a signal feeding point 112. The tunable matching circuit 120 is electrically connected to the signal feeding point 112. The tunable matching circuit 120 is configured to provide a loading impedance. The tunable matching circuit 120 includes an inductor 122, a first tunable capacitor 124 and a second tunable capacitor 126. One end of the first tunable capacitor 124 is electrically connected to one end of the inductor 122. One end of the second tunable capacitor 126 is electrically connected to another end of the first tunable capacitor 124 and the signal feeding point 112. Another end of the second tunable capacitor 126 is electrically connected to a system ground. The control unit 130 is electrically connected to the tunable matching circuit 120. The control unit 130 is configured to load an operating frequency and accordingly generate a control signal provided to the tunable matching circuit 120, so as to adaptively modulate capacitance values of the first tunable capacitor 124 and the second tunable capacitor 126 for adjusting the loading impedance.

However, the capacitance values of the first tunable capacitor 124 and the second tunable capacitor 126 in an embodiment are ranged from 0.2 pF to 20 pF. Besides, the inductor has a fixed inductance value, and the inductance value of the inductor is 2.2nH in an embodiment. Therefore, the tunable matching circuit 120 may adaptively adjust the loading impedance for impedance matching corresponding to radio frequency (RF) signals on different frequency bands, in a way of modulating capacitance values of the first tunable capacitor 124 and the second tunable capacitor 126 connected with the inductor 122, such that the effective bandwidth of operating frequency of the antenna module 100 can be extended. In a preferable embodiment, the capacitance value of the first tunable capacitor 124 is larger than the capacitance value of the second tunable capacitor 126.

Please refer FIG. 1, the control unit 130 includes a microprocessor 132 used for loading the operating frequency from a central processing unit 200. For further explanation, when a communication system utilizing the antenna module 100 operates at a specific radio frequency band or switches into another radio frequency band, e.g. switching from GSM band to LTE band, the microprocessor 132 may precisely detect the operating radio frequency band through the central processing unit 200.

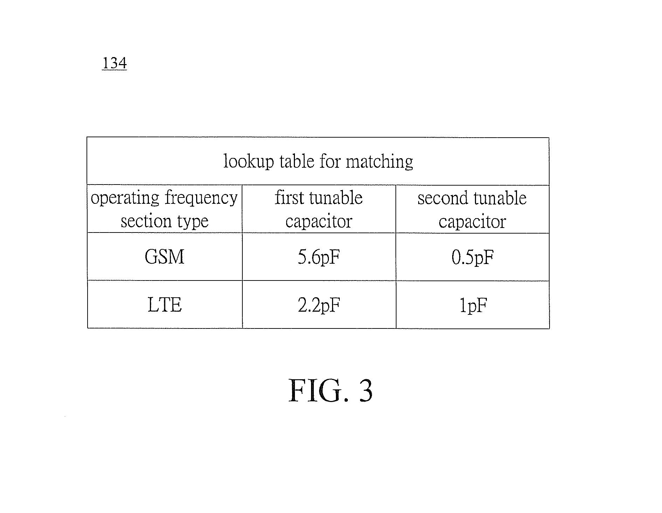

Secondly, the microprocessor 132 further includes a look-up table for matching 134. Please refer to FIG. 3, which illustrates a look-up table for matching in a preferable embodiment. The microprocessor 132 selects a data capacitance value of the first tunable capacitor 124 and a data capacitance value of the second tunable capacitor 126 from the look-up table for matching 134 based on the loaded operating bands. For example, when the operating frequency is in GSM band and the inductor has a fixed inductance value of 2.2nH, the selected data capacitance values of the first tunable capacitor 124 and the second tunable capacitor 126 are 5.6pF and 0.5pF respectively; however, when the operating frequency is in LTE band and the inductor has a fixed inductance value of 2.2nH, the selected data capacitance values of the first tunable capacitor 124 and the second tunable capacitor 126 are 2.2pF and 1.0pF respectively.

Besides, the control unit 130 further includes a control circuit 136, which is electrically connected with the microprocessor 132 and the tunable matching circuit 120. According to current capacitance values, the control circuit 136 is configured to generate the control signal provided to the tunable matching circuit 120. In this way, the control signal may trigger the corresponding modulation of the capacitance values of the first tunable capacitor 124 and the second tunable capacitor 126, such that the equivalent loading impedance at the input terminal of the tunable matching circuit 120 can be simultaneously matched to the output impedance of the transmission wiring when the operating frequency band is under switching, so as to ensure that the exact output RF signal from the power amplifier 300 can be transmitted to the antenna piece 110, and it can also reduce the return loss during the output transmission, vice versa. Therefore, the bandwidth of the operating frequency can be extended and the communication quality can be elevated at the same time.

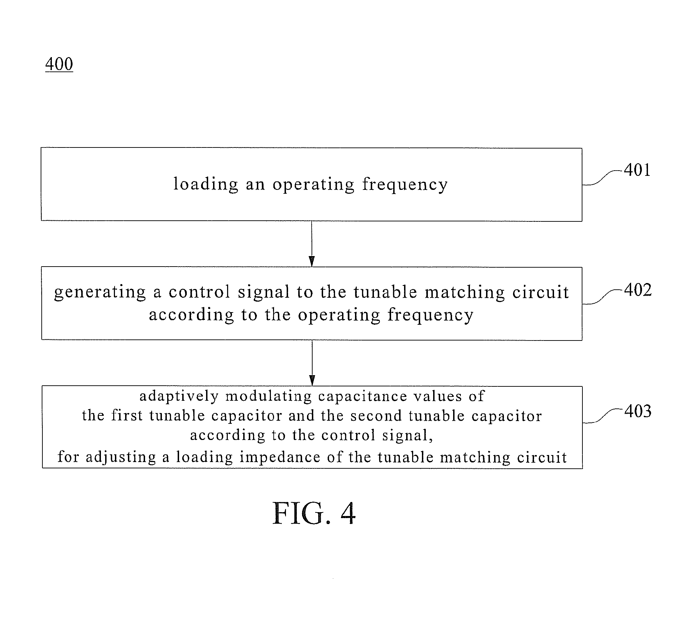

Please refer to FIG. 4, which is a flow chart illustrating an impedance matching method for an antenna module according to an embodiment of the invention. For example, the impedance matching method 400 of the invention can be applied in the antenna module 100 in FIG. 1. As in aforesaid embodiments, the antenna module 100 includes a tunable matching circuit 120, which has an inductor 122, a first tunable capacitor 124 and a second tunable capacitor 126.

In the flow chart of FIG. 4, the impedance matching method 400 includes steps as follow.

Firstly, step 401 is performed to load an operating frequency. Secondly, step 402 is performed to generate a control signal provided to the tunable matching circuit according to the operating frequency. At last, step 403 is performed to adaptively modulate capacitance values of the first tunable capacitor and the second tunable capacitor according to the control signal, for adjusting a loading impedance of the tunable matching circuit.

In step 401, the impedance matching method 400 is performed to load the operating frequency from a central processing unit 200. For further explanation, the impedance matching method 400 may precisely detect the operating band of radio frequency, outputted from a power amplifier 300, through the central processing unit 200.

In step 402, the impedance matching method 400 is performed to refer to a lookup table for matching 134, so as to selects a corresponding capacitance data corresponding to the operating frequency. The capacitance data may include a data capacitance value of the first tunable capacitor and a data capacitance value of the second tunable capacitor. In an embodiment, when the operating frequency is in GSM band and the inductor has a fixed inductance value of 2.2nH, the selected data capacitance values of the first tunable capacitor 124 and the second tunable capacitor 126 are 5.6pF and 0.5pF respectively; however, when the operating frequency is in LTE band and the inductor has a fixed inductance value of 2.2nH, the selected data capacitance values of the first tunable capacitor 124 and the second tunable capacitor 126 are 2.2pF and 1.0pF respectively.

Besides, the impedance matching method 400 is performed to generate the control signal provided to the tunable matching circuit 120 according to the selected capacitance data.

In step 403, according to the control signal, the impedance matching method 400 is performed to adaptively modulate capacitance values of the first tunable capacitor 124 and the second tunable capacitor 126 connected with the inductor 126 for adjusting the equivalent loading impedance of the tunable matching circuit 120, such that the effective bandwidth of operating frequency of the antenna module 100 can be extended.

Therefore, based on aforesaid concepts and methods, the subject application may increase the effective bandwidth of operating frequency without varying the main structure of the antenna piece, so as to cover the operating frequency bands of GSM and LTE at the same time. Accordingly, the total amounts and sizes of antenna pieces for each frequency bands can be reduced. In this way, the implementation area and production cost of the antenna module can be reduced while remaining a good communicative quality and a wide effective bandwidth of operating frequency.

It will be apparent to those skilled in the art that various modifications and variations can be made to the structure of the subject application without departing from the scope or spirit of the invention. In view of the foregoing, it is intended that the subject application cover modifications and variations of this invention provided they fall within the scope of the following claims.

## Claims

1. An antenna module, comprising:
an antenna piece (110) having a signal feeding point (112);
a tunable matching circuit (120) electrically connected to the signal feeding point (112), the tunable matching circuit being configured to provide a loading impedance, the tunable matching circuit comprising:
an inductor (122);
a first tunable capacitor (124), one end of the first tunable capacitor being electrically connected to one end of the inductor; and
a second tunable capacitor (126), one end of the second tunable capacitor being electrically connected to another end of the first tunable capacitor (124) and the signal feeding point (112), another end of the second tunable capacitor (126) being electrically connected to a system ground; and
a control unit (130) electrically connected to the tunable matching circuit (120), the control unit being configured to load an operating frequency and accordingly generate a control signal for the tunable matching circuit, so as to adaptively modulate capacitance values of the first tunable capacitor (124) and the second tunable capacitor (126) for adjusting the loading impedance.

2. The antenna module of claim 1, wherein the control unit (130) comprises a microprocessor (132) configured to load the operating frequency from a central processing unit (200).

3. The antenna module of claim 2, wherein the microprocessor (132) further comprises a lookup table for matching, and the microprocessor selects corresponding capacitance data from the lookup table according to the operating frequency.

4. The antenna module of claim 2 or 3, wherein the control unit (130) further comprises a control circuit (136) electrically connected with the microprocessor and the tunable matching circuit.

5. The antenna module of claim 4, wherein the control circuit (136) is configured to generate the control signal for the tunable matching circuit (120) according to the capacitance data, for respectively modulating the capacitance values of the first tunable capacitor (124) and the second tunable capacitor (126).

6. The antenna module of any of the preceding claims, wherein the capacitance values of the first tunable capacitor (124) and the second tunable capacitor (126) are ranged from 0.2 pF to 20 pF.

7. The antenna module of any of the preceding claims, wherein the capacitance value of the first tunable capacitor (124) is greater than the capacitance value of the second tunable capacitor (126).

8. The antenna module of any of the preceding claims, wherein an inductance value of the inductor (122) is 2.2 nH.

9. An impedance matching method for an antenna module, the antenna module comprising a tunable matching circuit (120), the tunable matching circuit having an inductor (122), a first tunable capacitor (124) and a second tunable capacitor (126), the impedance matching method comprising steps of:
loading an operating frequency (S401);
generating a control signal for the tunable matching circuit according to the operating frequency (S402); and
adaptively modulating capacitance values of the first tunable capacitor and the second tunable capacitor according to the control signal (S403), for adjusting a loading impedance of the tunable matching circuit.

10. The impedance matching method of claim 9, further comprising:
loading the operating frequency from a central processing unit (200).

11. The impedance matching method of claim 9 or 10, further comprising:
selecting capacitance data corresponding to the operating frequency.

12. The impedance matching method of claim 11, further comprising:
selecting the corresponding capacitance data from a lookup table for matching.

13. The impedance matching method of claim 11 or 12, furthering comprising:
generating the control signal for the tunable matching circuit according to the capacitance data.
